**Europäisches Patentamt**

**European Patent Office**

**Office européen des brevets**

(19)

(11) Veröffentlichungsnummer: **0 337 270 B1**

(12) **EUROPÄISCHE PATENTSCHRIFT**

(45) Veröffentlichungstag der Patentschrift: **20.01.93**

(51) Int. Cl.⁵: **H02B 11/167**

(21) Anmeldenummer: **89105938.8**

(22) Anmeldetag: **05.04.89**

(54) Schaltfeld für eine gekapselte Mittelspannungs-Schaltanlage.

(30) Priorität: **15.04.88 DE 3812507**

(43) Veröffentlichungstag der Anmeldung:
**18.10.89 Patentblatt 89/42**

(45) Bekanntmachung des Hinweises auf die
Patenterteilung:
**20.01.93 Patentblatt 93/03**

(84) Benannte Vertragsstaaten:
**DE FR GB SE**

(56) Entgegenhaltungen:
**DE-A- 2 264 185**
**US-A- 2 563 441**
**US-A- 4 447 858**

(73) Patentinhaber: **AEG Sachsenwerk GmbH**
**Einhauser Strasse 9**
**W-8400 Regensburg 1(DE)**

(72) Erfinder: **Reichl, Erwin, Dipl.-Ing.**
**Spessartstrasse 4**
**W-8409 Tegernheim(DE)**
Erfinder: **Weber, Manfred**
**Bergstrasse 61a**
**W-8420 Kelheim(DE)**
Erfinder: **Zimmerer, Rudolf**
**Eichenstrasse 18**
**W-8411 Wald(DE)**

(74) Vertreter: **Breiter, Achim, Dipl.-Ing.**
**AEG Aktiengesellschaft, Patent- und Lizenz-**
**wesen, Theodor-Stern-Kai 1**
**W-6000 Frankturt am Main 70(DE)**

**Beschreibung**

Die Erfindung betrifft ein Schaltfeld für eine gekapselte Mittelspannungsschaltanlage nach dem Oberbegriff des ersten Patentansprucs sowie ein Verfahren zu dessen Zusammenbau (siehe z.B. US-A-2 563 441).

Bei den bekannten Schaltanlagen der genannten Art, z.B. den Schaltfeldern der Baureihe WK, Ausführung C der Sachsenwerk AG besteht das Gerüst eines Schaltfeldes aus kräftigen Profileisenrahmen, der an der Front durch eine Stahlblechtür und an der Rückseite durch eine aufgeschraubte Blechplatte abgedeckt ist. Letzteres gilt auch für die Endwände einer vollständigen Schaltanlage, während bei einigen Anlagen auch zwischen einzelnen Schaltfeldern ganzflächige oder den Sammelschienenraum aussparende Feldtrennwände vorgesehen sind. Die Sammelschienen sind entweder je Feld und Phase durch einen Isolator oder mittels einer in der Feldtrennwand eingebauten Durchführung abgestützt, während die Gegenkontakte für den Schaltwagen auf anderen Isolatoren befestigt sind. Die Betriebsmittel im Abgang des Schaltfeldes, wie Strom- und Spannungswandler sowie Erdungsschalter und Gegenkontakte für den Schaltwagen sind zumindest teilweise an der Feldrückseite befestigt. Zur Halterung der Einbaugeräte dienen in das Gerüst eingeschraubte oder eingeschweißte Befestigungsprofile.

Der Zusammenbau der bekannten Schaltfelder erfolgt in folgenden Schritten:

1. Zusammenbau des vollständigen Gerüsts einschließlich der Befestigungsprofile zu einem dreidimensionalen Körper; Nachteil, großes, luftgefülltes Volumen während der ganzen Zeit der Bereitstellung und des Einbaues der Betriebsmittel.

2. Einbau der verschiedenen Geräte einzeln in das Gerüst; ausrichten der Geräte nach Montagelehre; d.h.,Lange Standzeit auf der Montagefläche.

3. Komplettierung der Schaltfelder durch Türen, Blechabdeckungen und gegebenenfalls der Schottungen; Anbringung der Antriebe und Verriegelungen. Einfahren des Schaltwagens.

Der Einbau von Sammelschienen und Kabelendverschlüssen erfolgt am Einbauort der Schaltanlagen.

Die untere Begrenzung der Schaltfelder wird durch eine ebene, dünne Blechplatte gebildet, auf der die Rollen des Schaltwagens laufen. Manchmal sind U-förmige Schienen zur Führung des Schaltwagens vorgesehen. In jedem Falle ergibt diese Bauweise mindestens an den Stellen, wo die Rollen des Schaltwagens einlaufen, einen Spalt zwischen der Unterkante der Tür und dem Blech, durch den im Störungsfall heiße Lichtbogengase austreten können. Außerdem ist der Aufbau der Schaltanlagen auf einen unebenen, rauhen Gebäudeboden problematisch, da sich zumindest die nicht versteifte Blechplatte auf Grund der Unebenheiten verformt und so das Einfahren des Schaltwagens in die Gegenkontakte erschwert oder unmöglich gemacht wird.

Die Aufgabe der vorliegenden Erfindung besteht darin, die Schaltfelder der angegebenen Art bezüglich des Berührungsschutzes und der Personensicherheit zu verbessern und dabei so zu gestalten, daß unter Verwendung vorgefertigter und weitgehend vorbestückter Baugruppen mit relativ geringer Bautiefe ein werkseitiger Zusammenbau der Schaltfelder mit kurzer Verweildauer in der Montageabteilung erfolgt.

Die Lösung der Aufgabe erfolgt erfindungsgemäß durch Anwendung folgender Merkmale:

a) Die Rückwand (1) bildet eine allseitig geschlossene formsteife Wanne mit hohem Bord, in der Befestigungsmöglichkeiten für die Sammelschienen (8a, b, c) die Stromwandler (10) den Erdungsschalter (11) und die Gegenkontakte (9, 12) für den Schaltwagen (6) sowie für weitere fest eingebaute Betriebsmittel vorgesehen sind,

b) der Frontrahmen (2) besteht aus einer mehrfach profilierten Bodenplatte (23), je einem mehrfachprofilierten Seitenholm links (21a) und rechts (21b) und einem profilierten oberen Querprofil (22), die miteinander starr verbunden sind und an der Frontseite eine durchgehende, spaltfreie Anschlagfläche für die Tür (7) mit einem Kragen (24) bilden,

c) auf die Bodenplatte (23) ist links und rechts je eine im Abstand (K) zur Schaltfeldunterkante angeordnete Lauffläche in Form eines Winkels (27) für die Rollen (25) des Schaltwagens (6) aufgesetzt,

d) der Kragen (24) der Bodenplatte (23) ist in Verlängerung der Winkel (27) bis auf das Maß (K) ausgeklinkt, wobei (K) ebenfalls einen spaltfreien Anschlag der geschlossen Tür (7) zuläßt, und

e) eine bei geöffneter Tür (7) wirksame Auffahrhilfe ermöglicht das Einfahren des Schaltwagens (6) in das Innere des Schaltfeldes auf die Winkel (27).

Bei dem erfindungsgemäßen Schaltfeld werden der Berührungsschutz und die Personensicherheit durch die dem Maß K entsprechende Stufe am Frontrahmen verbessert, weil nun die geschlossene Tür auch an den Stellen, an denen die Fahrrollen das Schaltfeld betreten, spaltfrei schließt. Außerdem ermöglicht die wannenförmige Ausbildung der Rückwand, daß auf der Rückseite keine Löcher oder andere Durchtritte für Schrauben oder andere Befestigungsmittel bleibende oder zeitlich begrenzte Öffnungen schaffen.

Die erfindungsgemäße Ausbildung der Rückwand und des Frontrahmens verbessert zusammen mit den verbindenen Profilen nicht zuletzt auch die Formsteifigkeit des Gehäuses als Kubus, so daß die Verformungsgefahr im Störungsfall relativ gering ist, obwohl der Materialeinsatz für diese Teile demjenigen bei bekannten Ausführungen entspricht.

Mit den erfindungsgemäßen Bauteilen gelingt außerdem auch für Mittelspannungsschaltanlagen die Realisierung einer schrittweisen Montagemethode, die sich sowohl für die Kosten als auch für Durchlaufzeiten in der Fabrik günstig auswirkt.

Gemäß Anspruch 11 ist erfindungsgemäß auch ein Verfahren zum Zusammenbau des Schaltfeldes nach einem oder mehreren der Ansprüche 1 bis 10 vorgesehen.

Zum genauen Verständnis der vorliegenden Erfindung verweisen wir auf die folgenden Zeichnungen. Im einzelnen stellen dar:

Figur 1    Schnitt durch ein erfindungsgemäßes Schaltfeld.
Figur 2    Schnitt des Gerüsts.
Figur 3    Ansicht des Gerüsts.
Figur 4    Montageverfahren der Rückwand in Seitenansicht.
Figur 5    Ansicht "Y" zu Figur 4.
Figur 6    Schnitt A-B des Gerüsts.
Figur 7    Ansicht "X" aus Figur 1.
Figur 8    Draufsicht zu Figur 7.
Figur 9    Schnitt durch ein erfindungsgemäßes Schaltfeld mit Sammelschienen-Schottung.

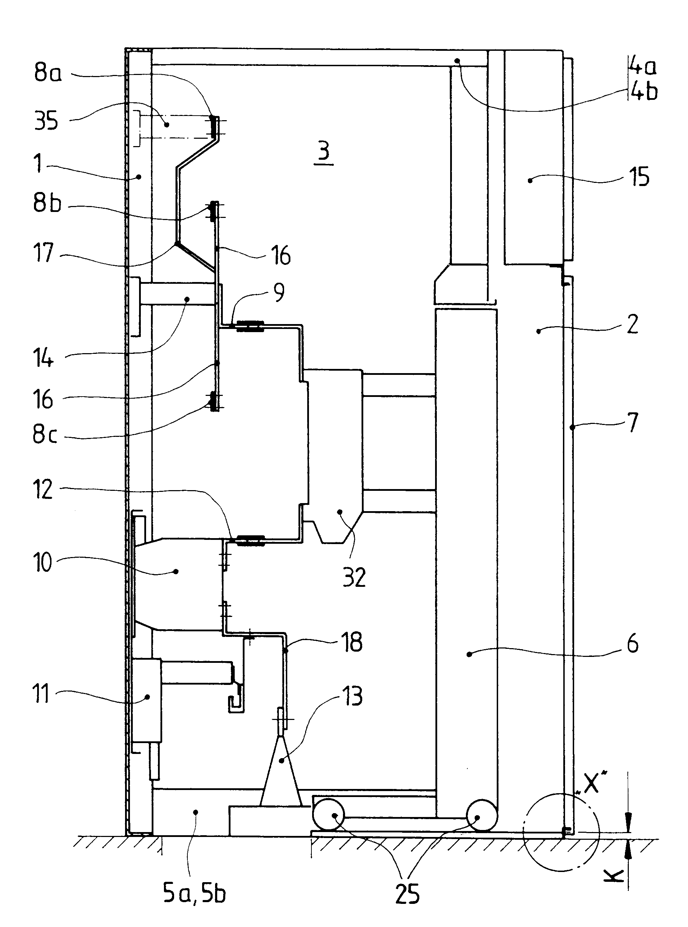

Das erfindungsgemäße Schaltfeld besteht nach Figur 1 aus einem Gerüst 3, einem Schaltwagen 6 sowie einem Steuerschrank 15 für die Niederspannungsbestückung. Das Gerüst 3 setzt sich aus der Rückwand 1, dem Frontrahmen 2 mit der Tür 7, den linken und rechten oberen Profilen 4a, 4b und den linken und rechten unteren Profilen 5a, 5b zusammen. Auf der Rückwand 1 sind alle fest eingebauten Betriebsmittel wie die Sammelschienen 8a, 8b und 8c, deren Gegenkontakte 9 für die oberen Einfahrkontakte des Leistungsschalters 32, pro Phase ein Stromwandler 10 mit einem aufgebauten Gegenkontakt 12 für die unteren Einfahrkontakte des Leistungsschalters und ein Erdungsschalter 11 angeordnet.Mit diesen fest eingebauten Teilen wirkt der Schaltwagen 6 zusammen, auf ihm ist als Schaltgerät meistens ein Leistungsschalter 32 oder auch ein Lastschalter mit pro Phase einem oberen und einem unteren Einfahrkontakt aufgebaut. In einer metallgekapselten Schaltanlage stehen meist mehrere Schaltfelder nebeneinander und sind durch die schon erwähnten Sammelschienen 8a, b, c miteinander verbunden. Die vordere Abdeckung des Schaltfelds wird durch die Tür 7 und den Steuerschrank 15 mit seiner Tür gebildet, während die rückseitige Abdeckung durch die Rückwand selber dargestellt wird. Eine obere Abdeckung, z.B. in Form von Druckentlastungsblechen, findet in der vorliegenden Beschreibung keine Erwähnung, da sie für die Erfindung ohne Bedeutung ist. Zwischen den einzelnen Feldern kann in üblicher Weise eine Schottung aus Isolierstoff oder Metall vorgesehen werden. Für den Anschluß eines Verbrauchers ist je Phase eine Ableitung 18 vorgesehen, an die der Kabelendverschluß 13 angeschlossen werden kann. In der Figur 1 ist der Schaltwagen 6 in der Betriebsstellung dargestellt, in der Trennstellung steht er ebenfalls noch hinter der geschlossenen Tür 7.

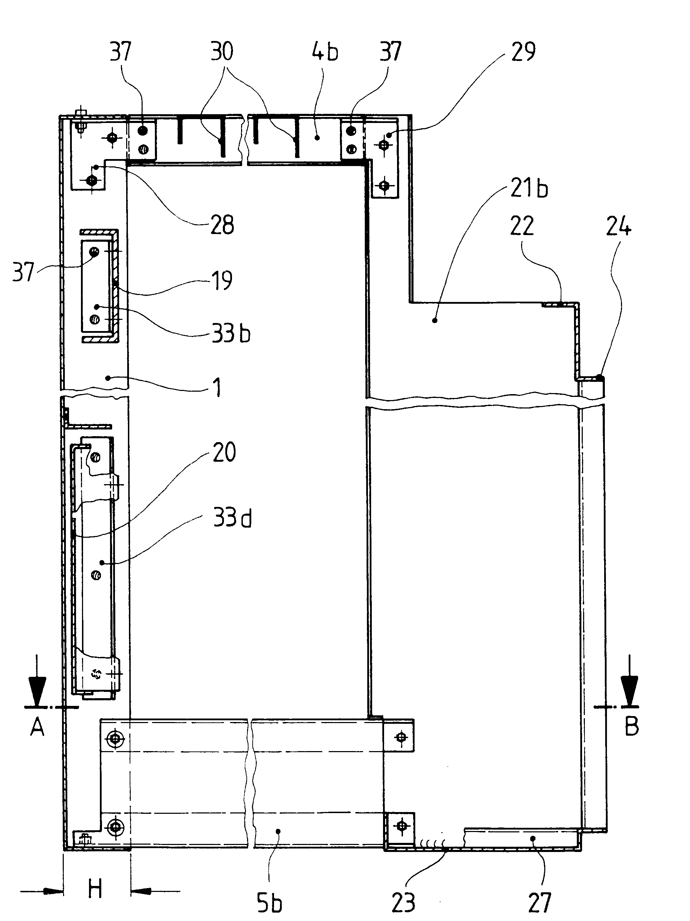

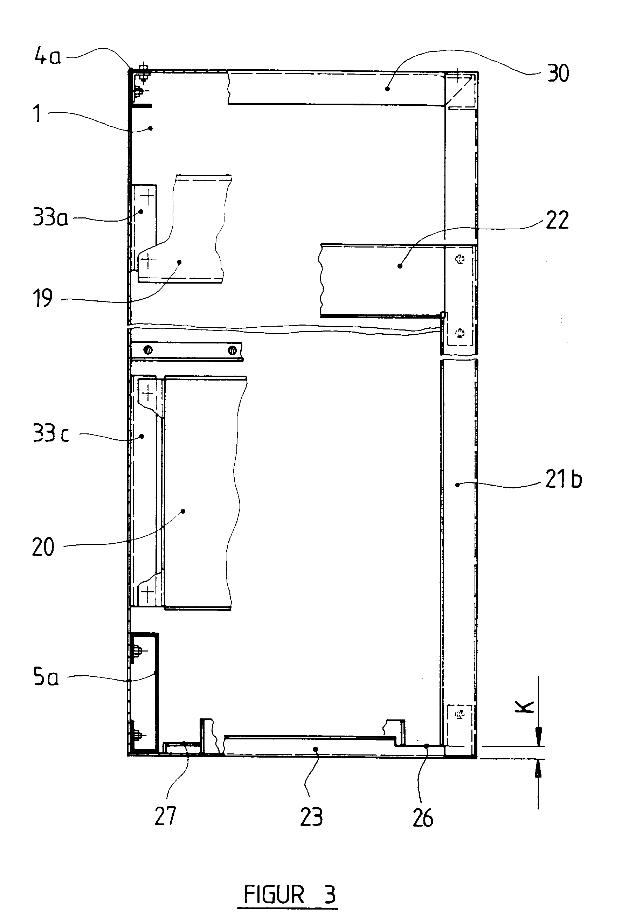

Aus den Figuren 2 und 3 wird ersichtlich, daß die Rückwand 1 als allseitig geschlossene Wanne mit der Höhe H ausgeführt ist. Sie kann dabei aus einer allseitig gebördelten Blechplatte mit verschweißten Kanten ausgeführt sein, an deren Seiten links und rechts Winkel 33a, b, c, d oder ähnliches für die Aufnahme von Trägern für die Befestigung der fest eingebauten Betriebsmittel angeschweißt sind. Bei der Befestigung der Winkel 33a, b, c, d kann die Methode der sogenannten Lochschweißung 37 eingesetzt werden. An die beiden oberen Winkel 33a und b ist ein U-förmiger Träger 19 für die Befestigung der Stützisolatoren 14 mit den Gegenkontakten 9 und den Verbindungsschienen 16, 17 angeschraubt, während an den beiden unteren Winkeln 33c und d eine Platte 20 für die Befestigung der Stromwandler 10 mit den Gegenkontakten 12 sowie des Erdungsschalters 11 angeschraubt ist.

Durch die erfindungsgemäße Anordnung der Stützisolatoren 14 und der Verbindungsschienen 16 für die in einer vertikalen Ebene liegenden Sammelschienen 8b und 8c werden die auf letztere im Falle eines mehrphasigen Kurzschlusses wirkenden Kräfte durch die geraden Verbindungsschienen 16 auf die Stützisolatoren 14 übertragen, wobei die Schienen nur Zug-Druck-Belastungen erfahren und somit nicht verformt werden können. Die bekannten Schaltanlagen verwenden in allen Phasen gekröpfte oder abgewinkelte Verbindungsschienen, die in Biegerichtung belastet und daher leicht verformt werden können. Deshalb sind dort in allen Phasen sowohl Abstützungen für die Sammelschienen als auch für die Gegenkontakte erforderlich und vorhanden. In der erfindungsgemäßen Schaltanlage muß lediglich die Sammelschiene 8a wegen der gekröpften Verbindungsschiene 17 bei großen Kurzschlußleistungen in jedem Schaltfeld mit einem Isolator 35 zusätzlich abgestützt werden. Die erfindungsgemäße Anordnung ist besonders bei solchen Schaltanlagen vorteilhaft einzusetzen, bei denen im Sammelschienenbereich keine Schottung zwischen den Schaltfeldern vorgesehen ist.

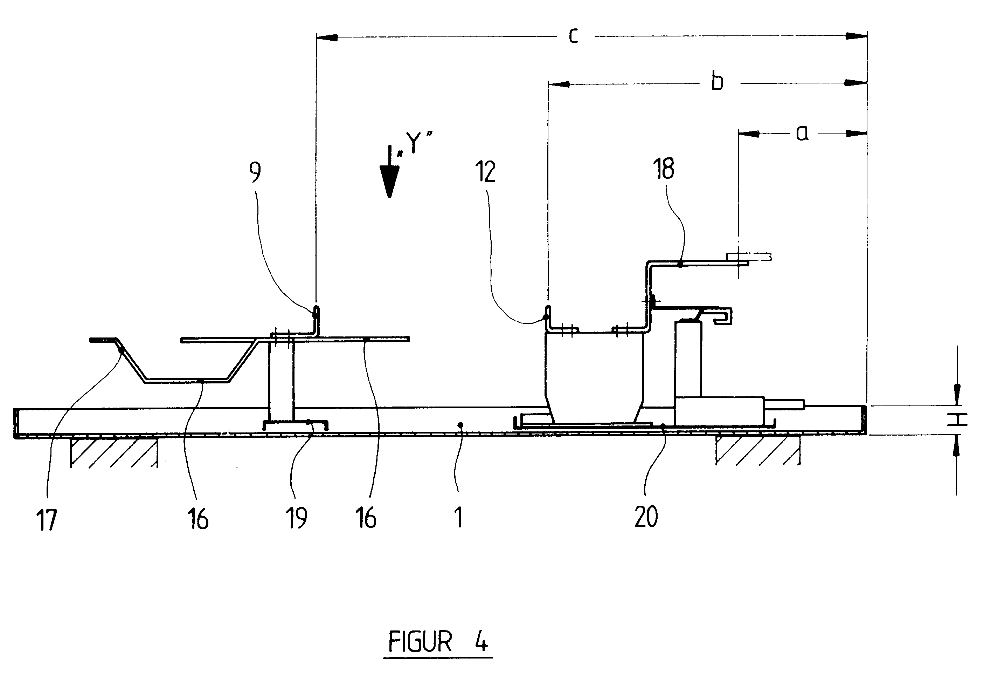

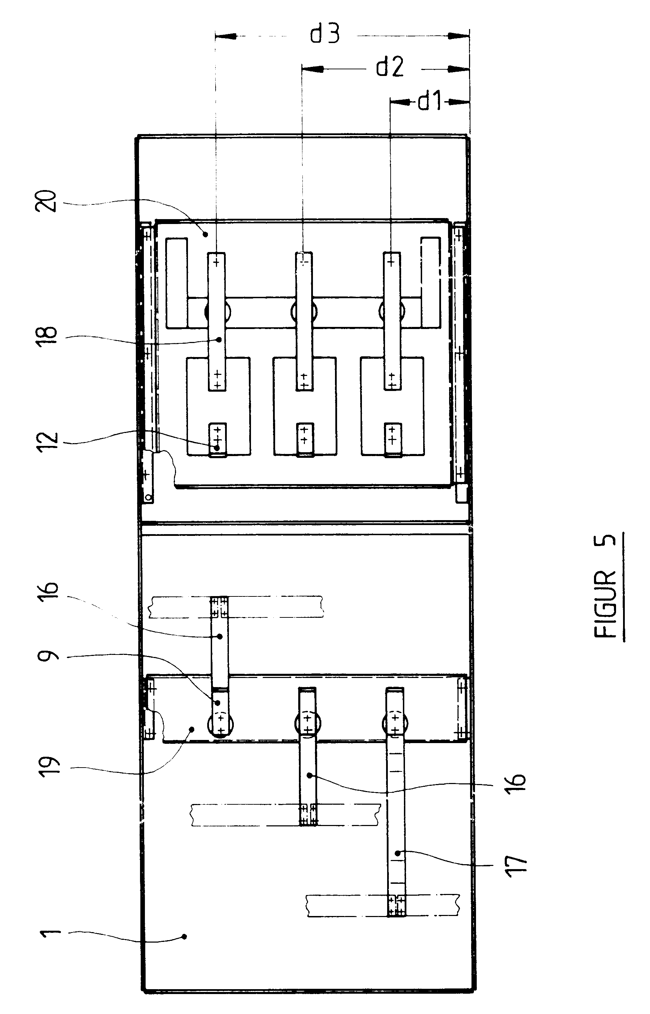

Mit der erfindungsgemäßen Rückwand 1 läßt sich ein vorteilhaftes Verfahren zum Zusammenbau des Schaltfeldes, insbesondere des Gerüstes mit den fest eingebauten Betriebsmitteln erreichen. Dabei kann als Baugruppe A in ergonomisch günstiger Stellung auf die flach aufliegende Rückwand 1 nach Figur 4 und 5 sowohl der Träger 19 als auch die Platte 20 mit der jeweiligen, bereits angegebenen Bestückung aufgebaut werden. Durch die Anwendung einer einfachen, nicht näher dargestellten Montagelehre lassen sich die dabei als Anschlußmaße festgelegten Abmessungen einstellen:

a Anschlußhöhe zwischen Ableitung 18 und Feldunterkante, die durch den entsprechenden Bördelrand der Rückwand 1 gegeben ist,

b Höhe der unteren Einfahrgegenkontakte 12.

c HÖhe der oberen Einfahrgegenkontakte 9.

$d_1, d_2, d_3$ Seitenabstände der Anschlußteile.

Eine Fixierung der Punkte, an denen die Sammelschienen 8a, b, c mit den Verbindungsschienen 16, 17 verschraubt werden, braucht bei üblicher Fertigungstoleranzen nicht auch noch in der Montagelehre zu erfolgen.

Als Baugruppe B wird eine Schweißgruppe des Frontrahmens 2 mit den beiden Seitenholmen 21a, 21b, dem Querprofil 22, der Bodenplatte 23 sowie den beiden Winkeln 27 unter Verwendung geeigneter Lehren vorgefertigt.

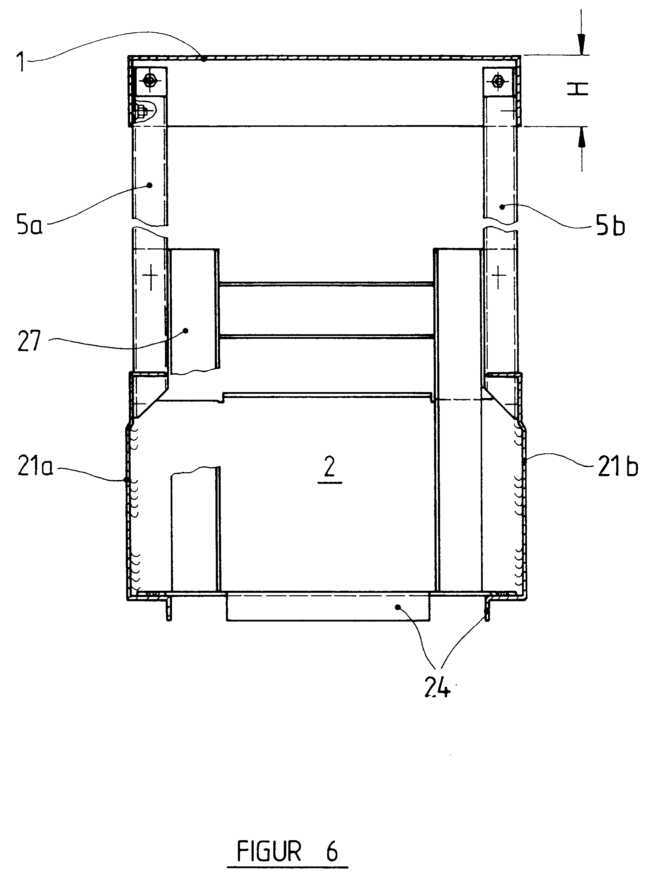

Der Frontrahmen 2 beinhaltet nach den Figuren 2, 3 und 6 einen linken und einen rechten Seitenholm 21a, 21b, ein Querprofil 22 sowie eine Bodenplatte 23. Die genannten Teile bestehen aus Blech, sind zur Erhöhung der Steifigkeit mehrfach abgewinkelt und bilden an der Frontseite nach dem Zusammenschweißen einen rundum laufenden Kragen 24, der mit der Tür 7 in derem geschlossenen Zustand ein Labyrinth bildet, durch das der Berührungsschutz verbessert und der Austritt heißer, durch Lichtbogenstörungen entstehender Gase erschwert wird. Dieser Kragen ist lediglich an den beiden Stellen, an denen die Rollen 25 des Schaltwagens 6 einfahren, unterbrochen. An diesen beiden Stellen weist die Bodenplatte 23 je eine Ausklinkung 26 auf, hinter der je ein Winkel 27 als Fahrbahn für die Rollen eingeschweißt ist. Ausklinkung und Winkel 27 haben gegenüber der Feldunterkante eine Höhe K, die so groß ist, daß die Unterkante der geschlossenen Tür 7 spaltfrei gegen die Frontseite der Bodenplatte 23 anschlägt. (Siehe hierzu Figur 1). Die eingeschweißten Winkel 27 haben eine vom erforderlichen Fahrweg des Schaltwagens 6 bestimmte Länge und versteifen die Bodengruppe des Schaltfeldes beträchtlich. Im Oberteil sind die Seitenholme 21a, 21b ausgespart und bieten Platz für den Einbau des Steuerschrankes 15.

Der Zusammenbau der Baugruppen A und B zu einem kompletten Gerüst erfolgt mit Hilfe der oberen (4a, 4b) und unteren Profile (5a, 5b) in Schraubtechnik. Erst hierbei wird die Montagefläche für die Schaltfelder benötigt, wobei gegenüber der herkömmlichen Methode eine deutlich geringere Belegungszeit erforderlich ist. Die genannten Baugruppen werden dabei auf der Schaltfeldermontagefläche oder einem speziellen Montagegestell mit Schwenkrahmen und dergleichen zu dem kompletten Gerüst zusammengefügt. Die Verschraubungen an den einzelnen Knotenstellen sind leicht zugänglich, so daß die gesamte Verbindungsarbeit nur kurze Zeit erfordert.

Aus den Figuren 2, 3 und 6 ist ferner ersichtlich, wie die Rückwand 1 und der Frontrahmen 2 miteinander verbunden sind. Die oberen, U-förmigen Profile 4a und 4b stoßen stumpf gegen den umgebördelten Rand der Rückwand 1; an jedes Profil ist an beiden Seiten je ein abgewinkeltes Knotenblech 28 und 29 vorzugsweise in "Lochschweißung" 37 angeschweißt. Die Profile sind mit den freien Enden der Knotenbleche mit der Rückwand 1 bzw. dem Frontrahmen 2 verschraubt.

Die untere Verbindung zwischen Rückwand 1 und Frontrahmen 2 erfolgt nach Figur 2 und 3 durch Profile 5a und 5b, die C-förmig mit sehr hohem Steg ausgeführt sind. Der Steg ist jeweils dabei der Innenseite des Schaltfeldes zugekehrt und dient als metallische Abdeckung zwischen den aktiven Teilen im Schaltfeld und den innerhalb des Profils verlegten Niederspannungs-Steuerleitungen.

Durch das beschriebene Montageverfahren wird eine zeitsparende, ergonomisch günstige Methode erfindungsgemäß auch für Module von Hochspannungsschaltanlagen eingesetzt. Dadurch wird weiterhin die Flexibilität der Fertigungsabteilung durch deutlich geringere Belegungszeiten der Montageflächen der kompletten Schaltfelder verbessert. Auf Grund der vorgefertigten Baugruppen A und B lassen sich als weiterer großer Vorteil auch die Lieferfristen für Mittelspannungsschaltanlagen verkürzen.

Das so montierte Gerüst ist soweit fertiggestellt, daß ein beliebiger Schaltwagen 6, dessen Anschlußstellen in bekannter Weise in einer Vorfertigung ebenfalls lehrenhaltig festgelegt sind, nach Anbau der Tür 7 eingefahren werden kann. Als letztes verbleibt die interne Montage der Gestängeverbindung zum Erdungsschalter sowie der zugehörigen Verriegelungen zwischen Schaltwagenantrieb, Erdungsschalterantrieb und NS-Stecker.

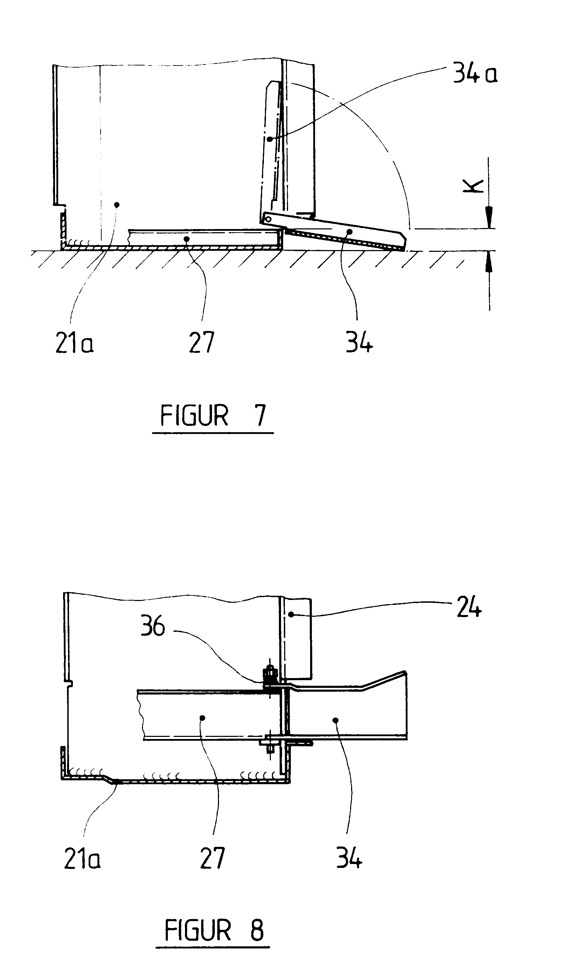

Zur Überbrückung der durch den Winkel 27 bestimmten Höhe K für den einzufahrenden Schaltwagen 6 sind gemäß Figur 7 und 8 nach einem weiteren Erfindungsmerkmal im Frontrahmen 2 schwenkbare Auffahrschienen 34 befestigt. Bei geschlossener Tür 7 werden die Auffahrschienen 34 durch Reibungsschluß, der beispielsweise durch eine gefederte Bolzenverbindung 36 hergestellt wird, in hoch geklappter Stellung gehalten. Für das Ein- oder Ausfahren eines Schaltwagens 6 werden sie ausgestellt; ihre Formgebung mit U-förmigem Querschnitt stellt eine lagerichtige Einfahrt des Schaltwagens 6 sicher, außerdem ermöglicht die Anwendung der Auffahrschienen 34 auch einen sicheren Betrieb bei unebenen, zu Niveauunterschieden zwischen Schaltfeldunterkante und Befestigungsfläche führenden Fußböden der Anlagengebäude.

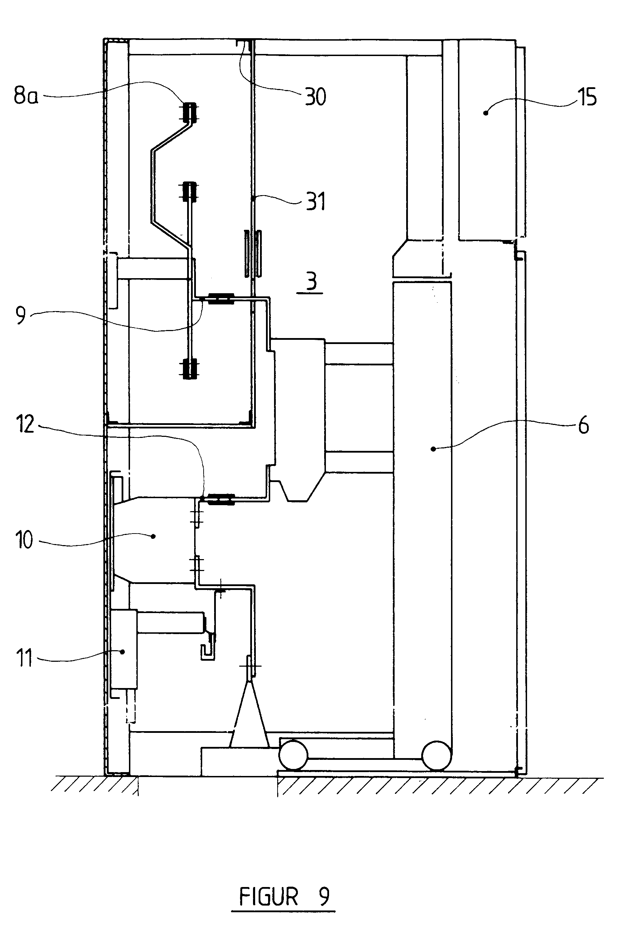

Schaltfelder nach der genannten Erfindung können nach Figur 9 ebenso gut auch mit einer Schottung, in unserem Beispiel mit einer Sammelschienenschottung 31 ausgerüstet sein. Für den Einbau derartiger Schottungen werden zwischen die oberen Profile Befestigungswinkel 30 eingebaut sowie eine entsprechende Aufnahme an der Rückwand 1 und der Bodenplatte 23 vorgesehen. Auf Figur 9 ist auch zu sehen, daß die Sammelschienen 8a, b, c, je Phase aus 2 Leitern bestehen können, um größere Nennströme führen zu können.

Zusammenfassend sind die Schaltfelder durch die Erfindung in folgenden Punkten verbessert:

1. Die Schaltfeldtür schließt allseitig spaltfrei, auch an den Stellen, wo die Rollen des Schaltwagens ein- und ausfahren. Ausklappbare Auffahrschienen gleichen Unebenheiten der Aufstellungsfläche aus.

2. Rückwand ist völlig glatt und ohne Löcher für Befestigungs- oder Verbindungsteile. Aus der Rückwand ragen keine Befestigungsmittel, wie Schraubenköpfe und dergleichen heraus.

3. Die Ausbildung der Rückwand als geschlossene Wanne ergibt eine große Eckensteifigkeit und Dichtigkeit gegen austretende heiße Gase von Störlichtbögen.

4. Die Ausbildung des Frontrahmens mit angeschweißten Winkeln für die Rollen des Schaltwagens erhöht zusammen mit 3.) die Formsteifigkeit des gesamten Schaltfeldgerüsts beträchtlich.

Der Zusammenbau der erfindungsgemäßen Schaltfelder erfolgt in der Produktion in folgenden Schritten:

1. Zusammenbau und Bestückung des Rückwandmoduls auf einer Vormontageabteilung mit Hilfe einer einfachen Montagelehre.

2. Gleichzeitige, aber völlig unabhängig von 1.) Herstellung des Frontrahmens als Schweißgruppe.

3. Zusammenbau der unter 1.) und 2.) gefertigten Module - im Bedarfsfall nach mehr oder weniger langer Zwischenlagerung - zu dem Schaltfeld, kurze Standzeit auf der Montagefläche.

4. Komplettierung der Schaltfelder durch Türen, Blechabdeckungen und gegebenenfalls der Schottungen; Anbringung der Antriebe und Verriegelungen. Einfahren der Schaltwagen.

Die Untergliederung in voneinander unabhängige Vormontageschritte und einen zu beliebigem Zeitpunkt möglichen Endmontageschritt sichert dem Fertigungsbetrieb eine hohe Flexibilität und dem Vertrieb die Einhaltung kurzfristiger Liefermöglichkeiten.

**EP 0 337 270 B1**

Bezugsziffern

Rückwand .......................... 1

Frontrahmen .......................... 2

Gerüst..... .......................... 3

linkes und rechtes
oberes Profil .......................... 4a, 4b

linkes und rechtes
unteres Profil .......................... 5a, 5b

Schaltwagen .......................... 6

Tür .......................... 7

Sammelschienen .......................... 8a, 8b, 8c

Gegenkontakt an Sammelschiene ......... 9

Stromwandler .......................... 10

Erdungsschalter .......................... 11

Gegenkontakt für Anschluß ........... 12

Kabelendverschluß .................... 13

Stützisolator .......................... 14

Steuerschrank .......................... 15

Verbindungsschiene .................... 16

gekröpfte Verbindungsschiene .......... 17

Ableitung .......................... 18

Träger .......................... 19

Platte .......................... 20

6

EP 0 337 270 B1

linker und rechter Seitenholm ...................21a, 21b

Querprofil ......................................22

Bodenplatte ....................................23

Kragen .........................................24

Rolle ..........................................25

Ausklinkung ....................................26

Winkel .........................................27

Knotenblech ....................................28

Knotenblech ....................................29

Befestigungswinkel .............................30

Schottung ......................................31

Leistungsschalter ..............................32

Befestigungswinkel .............................33a, b, c, d.

Auffahrschienen ................................34

Isolierteil ....................................35

gefederte Bolzenverbindung ...................36

Lochschweißung ...............................37

**Patentansprüche**

1. Schaltfeld für eine gekapselte Mittelspannungsschaltanlage das aus einem Schalterraum mit Schaltwagen (6), einem Sammelschienenbereich und einem Anschlußbereich besteht, bei dem
   - das Schaltfeld durch ein Gehäuse umhüllt ist, das aus platten- und/oder rahmenförmigen, vorzugsweise profilierten Blechteilen zusammengebaut ist und als äußere Abdeckungen eine Rückwand (1), eine Fronttür (7), obere Druckentlastungsbleche oder Klappen sowie ein Bodenblech oder Fahrschienen (34) zum Verfahren des Schaltwagens (6) aufweist,
   - im Gehäuse vorzugsweise im rückwärtigen Bereich fest eingebaute Betriebsmittel, wie Sammelschienen (8a,b,c), Meßwandler, Erdungsschalter (11) sowie ortsfeste Gegenkontakte (9,12) für den Schaltwagen (6) am Gerüst (3) oder auf besonderen Einbauprofilen befestigt sind,
   - die Sammelschienen (8a,b,c) in einer vertikalen Ebene angeordnet und pro Phase mindestens einmal abgestützt sind,
   - die ortsfesten Gegenkontakte (9) der Sammelschienen (8a,b,c) in einer horizontalen Ebene angeordnet und jeweils auf einem Betriebsmittel oder gesonderten Isolierteil (35) abgestützt sind und
   - die ortsfesten Gegenkontakte (12) des Anschlußbereichs in einer horizontalen Ebene angeordnet

7

sind,

**gekennzeichnet** durch die Merkmale:

a) die Rückwand (1) bildet eine allseitig geschlossene formsteife Wanne mit hohem Bord, in der Befestigungsmöglichkeiten für die Sammelschienen (8a,b,c) die Stromwandler (10) den Erdungsschalter (11) und die Gegenkontakte (9, 12) für den Schaltwagen (6) sowie für weitere fest eingebaute Betriebsmittel vorgesehen sind,

b) der Frontrahmen (2) besteht aus einer mehrfach profilierten Bodenplatte (23), je einem mehrfachprofilierten Seitenholm links (21a) und rechts (21b) und einem profilierten oberen Querprofil (22), die miteinander starr verbunden sind und an der Frontseite eine durchgehende, spaltfreie Anschlagfläche für die Tür (7) mit einem Kragen (24) bilden,

c) auf die Bodenplatte (23) ist links und rechts je eine im Abstand (K) zur Schaltfeldunterkante angeordnete Lauffläche in Form eines Winkels (27) für die Rollen (25) des Schaltwagens (6) aufgesetzt,

d) der Kragen (24) der Bodenplatte (23) ist in Verlängerung der Winkel (27) bis auf das Maß (K) ausgeklinkt, wobei (K) ebenfalls einen spaltfreien Anschlag der geschlossenen Tür (7) zuläßt, und

e) eine bei geöffneter Tür (7) wirksame Auffahrhilfe ermöglicht das Einfahren des Schaltwagens (6) in das Innere des Schaltfeldes auf die Winkel (27).

2. Schaltfeld nach Anspruch 1,

**dadurch gekennzeichnet,**

daß je Phase ein Stützisolator (14) den Gegenkontakt (9) trägt, der über eine Verbindungsschiene (16, 17) mit der zugehörigen Sammelschiene (8a,b,c) verbunden ist, wobei die Verbindungsschienen (16) der beiden den Stützisolatoren (14) benachbarten Sammelschienen (8b, 8c) geradlinig ausgeführt sind.

3. Schaltfeld nach Anspruch 2,

**dadurch gekennzeichnet,**

daß die den Stützisolatoren (14) nicht benachbarte Sammelschiene (8a) durch eine gekröpfte Verbindungsschiene (17) mit ihrem Gegenkontakt (9) verbunden ist und abhängig von der Größe der maximalen Kurzschlußleistung durch ein zusätzliches Isolierteil (35) gegen die Rückwand abgestützt sein kann.

4. Schaltfeld nach Anspruch 1,

**dadurch gekennzeichnet,**

daß die Gegenkontakte (12) auf einem der im Anschlußbereich vorgesehenen Betriebsmittel, z.B.Stromwandler (10) befestigt sind.

5. Schaltfeld nach Anspruch 1,

**dadurch gekennzeichnet,**

daß die oberen Profile (4a, 4b) stumpf an die Rückwand (1) und die Seitenholme (21a, 21b) anschließen und mittels angeschweißter, durch Abwinkelung versteifter Knotenbleche (28, 29) mit diesen Teilen verbunden sind.

6. Schaltfeld nach Anspruch 1 oder 5,

**dadurch gekennzeichnet,**

daß die Rückwand (1) als an den Ecken verschweißte Blechwanne ausgeführt ist und Befestigungswinkel (33a, b, c, d) angeschweißt sind.

**7.** Schaltfeld nach einem der Ansprüche 1, 5 oder 6,

**dadurch gekennzeichnet,**

daß als Schweißverbindung (37) ein an sich unter dem Namen "Lochschweißung" bekanntes Verfahren angewendet ist.

**8.** Schaltfeld nach Anspruch 1,

**dadurch gekennzeichnet,**

daß herausklappbare Auffahrschienen (34) beim Ein- und Ausfahren des Schaltwagens (6) die Höhendifferenz (K) für die Rollen (25) überwinden.

**9.** Schaltfeld nach Anspruch 8,

**dadurch gekennzeichnet,**

daß die Auffahrschienen (34) unter Selbsthemmung schwenkbar sind und bei geschlossener Tür (7) innerhalb des Schaltfeldes stehen.

**10.** Schaltfeld nach Anspruch 8 oder 9,

**dadurch gekennzeichnet,**

daß die Auffahrschienen (34) ein U-förmiges Profil zur Führung des Schaltwagens (6) aufweisen.

**11.** Verfahren zum Zusammenbau des Schaltfeldes nach einem oder mehreren der Ansprüche 1 bis 10,

**dadurch gekennzeichnet,**

daß eine vorgefertigte, die Rückwand (1) enthaltende und mit den fest eingebauten Betriebsmitteln vorbestückte Baugruppe (A) mit einer vorgefertigten, den Frontrahmen (2) enthaltenden Baugruppe (B) mittels der Profile (4a, 4b, 5a, 5b) zu einem funktionsfähigen, den Schaltwagen (6) aufnehmenden Gerüst des Schaltfelds verbunden, vorzugsweise verschraubt ist.

**12.** Verfahren zum Zusammenbau des Schaltfeldes nach Anspruch 1 und einem oder mehreren der Ansprüche 1 bis 4 und 6,

**dadurch gekennzeichnet,**

daß zur Bestückung der Baugruppe (A) auf die Rückwand (1) die Sammelschienen (8a, b, c) mit ihren Gegenkontakten (9) und Isolationen (14) mittels dem Träger (19), und die Gegenkontakte (12) des Anschlußbereichs sowie gegebenenfalls die Stromwandler (10), der Erdungsschalter (11) und zusätzliche Betriebsmittel mittels der Platte (20) unter Verwendung einer geeigneten Montagelehre in vorzugsweise horizontaler Lage anschraubbar sind.

**13.** Verfahren zum Zusammenbau des Schaltfeldes nach Anspruch 1, 7 und 11,

**dadurch gekennzeichnet,**

daß die Baugruppe (B) durch Verschweißen der den Frontrahmen (2) bildenden Bauteile in einer geeigneten Lehre vorgefertigt ist.

## Claims

**1.** Switchgear panel for a medium voltage enclosed switchgear, comprising a switch chamber with a removable truck (6), a busbar region and a terminal region, in which

- the switchgear panel is enclosed by a housing, which is constructed from plate-shaped and/or frame-shaped, preferably profiled sheet metal elements and as its outer covers comprises a rear wall (1), a front door (7), upper pressure relief plates or flaps and a base plate or rails (34) for the displacement of the removable truck (6),
- in the housing, preferably in the rear section, permanently fitted operating installations, such as busbars (8a, b, c), measuring transformer, earthing switch (11) and fixed counter contacts (9, 12) for the removable truck (6) are secured to the framework (3) or on special built-in profiles,
- the busbars (8a, b, c) are arranged in a vertical plane and are supported at least once per phase,
- the fixed counter contacts (9) of the busbars (8a, b, c) are arranged in a horizontal plane and are supported in each case on an operating installations or separate insulating element (35) and
- the fixed counter contacts (12) of the terminal region are arranged in a horizontal plane,

characterised by the following features:

a) the rear wall (1) forms an inherently rigid trough, which is closed on all sides, has a high edge and in which securing possibilities are provided for the busbars (8a, b, c), the current transformer (10), the earthing switch (11) and the counter contacts (9, 12) for the removable truck (6) as well as for further permanently fitted operating installations,

b) the front frame (2) comprises a multi-profiled base plate (23), a multi-profiled lateral beam on the left (21a) and right (21b) respectively and a profiled upper cross profile (22), which parts are rigidly connected with one another and on the front side form a continuous, gap-free abutment surface for the door (7) with a collar (24),

c) secured to the base plate (23) on the left and right in each case is a running surface for the rollers (25) of the removable truck (6), said running surface being arranged at a distance (K) from the lower switchgear panel edge and having the form of an angle plate (27),

d) the coller (24) of the base plate (23) is coped in the extension of the angle plate (27) as far as the distance (K), (K) also allowing for a gap-free abutment of the closed door, and

e) a ramp aid effective when the door (7) is open allows the removable truck (6) to be driven into the interior of the switchgear panel onto the angle plate (27).

2. Switchgear panel according to claim 1, characterised in that one rod insulator (14) per phase supports the counter contact (9), which is connected via a connecting bar (16, 17) with the associated busbar (8a, b, c) the connecting bars (16) of the two busbars (8b, 8c) adjacent the rod insulators (14) being linear.

3. Switchgear panel according to claim 2, characterised in that the bushbar (8a) not adjacent the rod insulators (14) is connected with its counter contact (9) by means of a cranked connecting bar (17) and can be supported against the rear wall by means of an additional insulating element (35) as a function of the value of the maximum short-circuiting power.

4. Switchgear panel according to claim 1, characterised in that the counter contacts (12) are secured to an operating installation, e.g. current transformer (10), provided in the terminal region.

5. Switchgear panel according to claim 1, characterised in that the upper profiles (4a, 4b) abut squarely against the rear wall (1) and the lateral beams (21a, 21b) and are connected with said parts by means of gusset plates (28, 29) welded on and reinforced by angling.

6. Switchgear panel according to claim 1 or 5, characterised in that the rear wall (1) is designed as a sheet metal trough welded at the corners and securing angle plates (33a, b, c, d) are welded on.

7. Switchgear panel according to one of claims 1, 5 or 6, characterised in that a method known per se as "plug and slot welding" is used as a welding connection (37).

8. Switchgear panel according to claim 1, characterised in that the ramp rails (34), which can be unfolded, compensate for the height difference (K) for the rollers (25) when the removable truck (6) is removed.

9. Switchgear panel according to claim 8, characterised in that the ramp rails (34) are pivotable with automatic locking and are arranged inside the switchgear panel when the door (7) is closed.

10. Switchgear panel according to claim 8 or 9, characterised in that the ramp rails (34) comprise a U-shaped profile for guiding the removable truck (6).

11. Method for constructing the switchgear panel according to one or more of claims 1 to 10, characterised in that a prefabricated unit (A) containing the rear wall (1) and fitted with the permanently fitted operating installations is connected, preferably screwed, with a prefabricated unit (B) containing the front frame (2) by means of the profiles (4a, 4b, 5a, 5b) to form a functional framework of the switchgear panel for accomodating the removable trolley (6).

12. Method for constructing the switchgear panel according to claim 1 and one or more of claims 1 to 4 and 6, characterised in that, for fitting out the unit (A), the busbars (8a, b, c) with their counter contacts (9) and insulators (14) can be screwed onto the rear wall (1) by means of the support (19) in a preferably horizontal position, and the counter contacts (12) of the terminal region and optionally the current transformer (10), the earthing switch (11) and additional operating installations by means of the plate (20) using a suitable assembly teaching.

13. Method for constructing the switchgear panel according to claims 1, 7 and 11, characterised in that the unit (B) is prefabricated by welding the components forming the front frame (2) according to a suitable teaching.

## Revendications

1. Panneau de distribution pour une installation de distribution moyenne tension blindée, qui se compose d'une chambre d'interrupteur avec un chariot de distribution (6), d'une zone de barres omnibus et d'une zone de connexion, dans lequel

le panneau de distribution est entouré d'un coffret, qui est monté avec des pièces en tôle, de préférence profilées, en forme de cadre et/ou de plaque, et qui présente en tant que protection extérieure une paroi arrière (1), une porte frontale (7), des tôles supérieures de décharge de pression ou volets ainsi qu'une plaque de fond ou des rails de roulement (34) pour le déplacement du chariot de distribution (6).

des moyens de fonctionnement montés fixement dans le coffret, de préférence à l'arrière, tels que des barres omnibus (8a, b, c); des transformateurs de mesure, des interrupteurs de mise à la terre (11) ainsi que des contacts (9, 12) fixes pour le chariot de distribution (6), sont fixés au bâti (3) ou sur des profilés de montage particuliers,

les barres omnibus (8a, b, c) sont disposées dans un plan vertical et sont maintenues au moins une fois par phase.

les contacts opposés fixes (9) des barres omnibus (8a, b, c) sont disposés dans un plan horizontal et prennent appui chacun sur un moyen de fonctionnement ou une pièce isolante séparée (35) et

les contacts opposés fixes (12) de la zone de connexion sont disposés sur un plan horizontal,

caractérisé en ce que
a. la paroi arrière (1) forme une cuvette indéformable fermée de tous les côtés à haut bord, dans laquelle sont prévus des possibilités de fixation pour les barres omnibus (8a, b, c), les transformateurs de courant (10), l'interrupteur de mise à la terre (11) et les contacts opposés (9, 12) pour le chariot de distribution (6) ainsi que pour d'autres moyens de fonctionnement montés fixement,
b. le cadre frontal (2) se compose d'une plaque de fond (23) à profilé multiple, d'un longeron latéral à profilé multiple gauche (21a) et droit (21b) et d'un profilé transversal supérieur profilé (22), qui sont reliés rigidement entre eux et forment, sur la face frontale, une surface de butée continue sans interstice pour la porte (7) avec un rebord (24).
c. sur la plaque de fond (23) est placée à gauche et à droite une surface de roulement en forme d'angle (27) disposée à distance (K) de l'arête inférieure du panneau de distribution pour les roulettes (25) du chariot de distribution (6),
d. le rebord (24) de la plaque de fond (23) présente une encoche en prolongement de l'angle (27) jusqu'à la mesure (K), cette mesure (K) permettant alors également une butée sans interstice de la porte fermée (7),

e. une aide au démarrage effective (porte ouverte (7)) permet l'introduction du chariot de distribution (6) à l'intérieur du panneau de distribution sur l'angle (27).

2. Panneau de distribution selon la revendication 1, caractérisé en ce que

un isolateur support (14) supporte par phase le contact opposé (9), qui est relié par une barre de connexion (16, 17) avec les barres omnibus correspondantes (8a, b, c), les barres de connexion (16) des deux barres omnibus (8b, 8c) à proximité des isolateurs supports (14) étant alors réalisées en ligne droite.

3. Panneau de distribution selon la revendication 2, caractérisé en ce que

la barre omnibus (8a) non située à proximité des isolateurs supports (14) est reliée à son contact opposé (9) par une barre de connexion coudée (17) et peut s'appuyer contre la paroi arrière par une pièce isolante supplémentaire (35) en fonction de l'ampleur de la capacité maximale de court-circuit.

4. Panneau de distribution selon la revendication 1, caractérisé en ce que

les contacts opposés (12) sont fixés sur l'un des moyens de fonctionnement prévu dans la zone de jonction, par exemple le transformateur de courant (10).

5. Panneau de distribution selon la revendication 1, caractérisé en ce que

les profilés supérieurs (4a, 4b) se raccordent bord à bord à la paroi arrière (1) et aux longerons latéraux (21a, 21b) et sont reliés à ces pièces à l'aide de plaques d'assemblage (28, 29) soudées et raidies par un pliage en U.

6. Panneau de distribution selon la revendication 1 ou 5 caractérisé en ce que

la paroi arrière (1) est conçue comme une cuvette en tôle soudée aux angles et des angles de fixation (33a, b, c, d) y sont soudés.

7. Panneau de distribution selon l'une des revendications 1, 5 ou 6, caractérisé en ce que

en tant que groupe soudé (37), un procédé connu en soi sous le nom de "soudage en trous" est utilisé.

8. Panneau de distribution selon la revendication 1, caractérisé en ce que

les rails rabattables d'accès (34) surmontent les différences de hauteur (K) pour les roulettes (25) au moment de l'entrée et de la sortie du chariot de distribution (6).

9. Panneau de distribution selon la revendication 8, caractérisé en ce que

les rails d'accès (34) pivotent par autoblocage et se trouvent à l'intérieur du panneau de distribution, porte fermée (7).

10. Panneau de distribution selon la revendication 8 ou 9, caractérisé en ce que

les rails d'accès (34) présentent un profilé en U pour le guidage du chariot de distribution (6).

11. Procédé pour l'assemblage d'un panneau de distribution selon l'une ou plusieurs des revendications 1 à 10, caractérisé en ce que

un groupe de montage (A) prémonté et pré-équipé avec des moyens de fonctionnement montés fixement, comprenant la paroi arrière (1), est relié, de préférence vissé, en un bâti opérationnel du panneau de distribution et reçoit le chariot de distribution (6) avec un groupe de montage (B) prémonté, comprenant le cadre frontal (2), à l'aide des profilés (4a, 4b, 5a, 5b).

**12.** Procédé pour l'assemblage d'un panneau de distribution selon la revendication 1 ou une ou plusieurs revendications de 1 à 4 et 6, caractérisé en ce que

sur la paroi arrière (1), on peut visser, pour l'équipement du groupe de montage (A), les barres omnibus (8a, b, c) avec leurs contacts opposés (9) et leurs isolateurs (14) au moyen du support (19) et les contacts opposés (12) de la zone de jonction ainsi qu'éventuellement les transformateurs de courant (10), l'interrupteur de mise à la terre (11) et des moyens de fonctionnement supplémentaires à l'aide de la plaque (20), en appliquant une technique de montage adaptée en position de préférence horizontale.

**13.** Procédé pour l'assemblage d'un panneau de distribution selon la revendication 1, 7 ou 11, caractérisé en ce que

le groupe de montage (B) est prémonté par soudure des pièces de construction formant le cadre frontal (2) par une technique adaptée.

FIGUR 1

FIGUR 2

FIGUR 3

FIGUR 4

EP 0 337 270 B1

FIGUR 5

FIGUR 6

FIGUR 7

FIGUR 8

FIGUR 9